# EUROPEAN PATENT SPECIFICATION

(11) **EP 0 425 280 B1**
(45) Date of publication and mention of the grant of the patent: **20.03.1996**
(21) Application number: 90311680.4
(22) Date of filing: 24.10.1990
(51) Int. Cl.: C09D 11/00

(54) **Water-resistant ink composition and process for preparation**
Wasserbeständige Tintenzusammensetzung
Composition d'encre résistante à l'eau et procédé pour sa préparation

(30) Priority: 26.10.1989 JP 277313/89
(43) Date of publication of application: 02.05.1991
(73) Proprietor: KABUSHIKI KAISHA PILOT, Hiratsuki-shi, Kanagawa 254 (JP)
(72) Inventor: Kiyomoto, Hiroshi, c/o Kabushiki Kaisha Pilot, Hiratsuki-shi, Kanagawa 254 (JP); Sugimoto, Yasuyuki, c/o Kabushiki Kaisha Pilot, Hiratsuki-shi, Kanagawa 254 (JP)
(74) Representative: Baverstock, Michael George Douglas

(56) References cited:
- EP-A- 0 273 718
- EP-A- 0 274 216
- GB-A- 2 055 116
- WORLD PATENTS INDEX LATEST Derwent Publications Ltd.,London, GB; AN 84-033176 &JP-A-58 222 165 (RICOH KK) 23 December 1983

## Description

### WATER-RESISTANT INK COMPOSITION AND PROCESS FOR PREPARATION

The present invention relates to an aqueous ink composition, more particularly an aqueous ink composition which has excellent water resistance on paper and aging resistance so as to be suitable for use as inks for writing tools, plotter pens or ink jet printers.

A variety of investigations and developments have been carried out hitherto for the purpose of affording water resistance to written matter on paper. Pigment type aqueous inks containing pigments are popular, but these inks lack stability when in the form of a dispersion and exhibit problems of aging resistance manifested by sedimentation of the pigment particles.

The inventors of the present Patent Application have conducted research on aqueous ink compositions using a water soluble dye which has excellent aging resistance as compared with pigments and have excellent water-resistance on paper.

It has now been discovered that an anionic dye ink to which has been added a sparingly water-soluble compound containing at least one oleophilic group selected from an aromatic ring or an aliphatic hydrocarbon having 6 - 12 carbon atoms and at least one hydrophilic group selected from a group having at least one atom such as O, N or S remarkably improves the water resistance on paper.

However, the aforementioned compound is sparingly soluble in water, so that only a dispersion type ink can be obtained. On the other hand, it has been found that among the aforementioned compounds, the compounds having a solubility of 5% by weight or more in ethanol at 20°C are preferred as they are solubilized very easily with an anionic dye having a surface tension in the range of 60 dyn/cm or less at 20°C measured as a 0.1% by weight aqueous solution.

EP-A-0 274 216 describes an aqueous ink composition having improved water resistance comprising a water-soluble anionic dye and an antioxidant in which the water soluble dye is oxidized on the paper and thus rendered water insoluble. However that specification does not recommend the use of anionic dyes alone because this would lead to reduced water-resistance.

EP-A-0 273 718 describes a recording liquid containing a colouring matter having lower solubility in water but does not suggest anionic dyes or a sparingly soluble water compound as defined in the present invention.

GB-A-2 055 116 describes ink compositions containing a water-soluble dye, a nitrogen-containing heterocyclic ketone and urea or thiourea. However the present invention does not use the nitrogen-containing heterocyclic ketone compound described in that specification.

JP-A-58 222 165 describes an aqueous composition capable of forming water resistant images comprising a water soluble dye and an antifungal agent such as butyl p-hydroxybenzoate. However, the present invention does not employ the latter compound in its compositions.

The Applicants have discovered an aqueous ink which has excellent ageing resistance and has an excellent water-resistance on paper.

The present invention resides in a water-resistant ink composition comprising:
(a) water,
(b) an anionic dye, and
(c) a water-resistance modifier which contains as an effective component a sparingly water-soluble compound comprising at least one oleophilic group selected from an aromatic ring and an aliphatic hydrocarbon having 6 - 12 carbon atoms, and at least one hydrophilic group having at least one of O, N and S atoms.

In a further aspect of the invention, the water-resistant ink composition contains an anionic dye having a surface tension in the range of 60 dyn/cm or less at 20°C measured as a 0.1% by weight aqueous solution.

The water-resistance modifier preferably comprises an effective amount of a sparingly water-soluble compound which contains at least one oleophilic group selected from an aromatic ring or an aliphatic hydrocarbon having 6 - 12 carbon atoms and at least one hydrophilic group having at least one of O, N and S atoms and which has a solubility of 5% by weight or more in ethanol at 20°C.

In a more detailed aspect, the sparingly water-soluble compound can be one or more of the compounds selected from
(a) a compound having a dicarboxylate structure,
(b) a compound having a benzophenone structure,
(c) a compound having a phenol structure,
(d) a compound having an imidazole structure,
(e) a compound having a benzothiazol structure,
(f) a compound having a benzoin structure, and
(g) a compound having a benzoate structure.

It is advantageous for the water-resistant ink compositions according to the invention to have incorporated therein one or more dry-up resistance imparting agents such as an alcohol, an amine, a urea compound, 2-pyrrolidone, polyvinyl pyrrolidone, sorbitol and dimethylsulfone.

The urea compound suitable for purposes of the invention include one or more selected from urea, thiourea, ethylene urea, hydroxypropylurea, hydroxyethylurea, ethylene thiourea and diethylthiourea.

Another aspect of the invention resides in a process for preparing a water-resistant ink composition comprising blending together
(a) water,
(b) an anionic dye having a surface extension of 60 dyn/cm or less at 20°C measured as a 0.1% by weight solution in water, and
(c) a water-resistance modifier which contains an effective amount of a sparingly water-soluble compound comprising at least one oleophilic group selected from an aromatic ring or an aliphatic hydrocarbon having 6 - 12 carbon atoms and at least one hydrophilic group having at least one of O, N and S atoms,
   to thereby form a solution. The aliphatic hydrocarbon group preferably includes an alkylene group.

In carrying out the process, the step of forming a solution is preferably conducted at a temperature not lower than room temperature.

Although applicants do not wish to be bound by any theory, the improvement of the water-resistance on paper is believed to be due to the following assumption. A sparingly water-soluble compound containing at least one hydrophilic group which has at least one highly electronegative atom such as O, N or S will form hydrogen sonds between paper and a dye and between the sparingly water-soluble compound and paper which are stronger than the conventional hydrogen bond between paper and a dye and will further improve the water-resistance on paper because of the hydrophobic properties of the sparingly water-soluble compound.

It is also believed that an anionic dye having a surface tension of 60 dyn/cm or less at 20°C measured as a 0.1% by weight aqueous solution will form a micell which solubilizes the sparingly water-soluble compound.

In this connection, a compound having a solubility of 5% by weight or more in ethyl alcohol among the sparingly water-soluble compounds is preferably solubilised.

The anionic dyes used according to the present invention and having a surface tension of 60 dyn/cm or less at 20°C measured as a 0.1% by weight aqueous solution include:

Acid dyes:
C.I. Acid Yellow 40,
C.I. Acid Orange 51,
C.I. Acid Red 114 and 249,
C.I. Acid Blue 83, 90, 103 and 127,
C.I. Acid Green 25 and 27;

Direct dyes:
C.I. Direct Black 154, and
Epoxydized C.I. Direct Black 154.

The aforementioned dyes may be used alone or as a combination of the two or more.

The sparingly water-soluble compound used according to the present invention and comprising at least one oleophilic group selected from an aromatic ring or an aliphatic hydrocarbon having 6 - 12 carbon atoms and at least one hydrophilic group selected from the groups having at least one of O, N and S atoms includes one or more of the compounds selected from
- (a): a compound having a dicarboxylate structure,
- (b): a compound having a benzophenone structure,
- (c): a compound having a phenol structure,
- (d): a compound having an imidazole structure,
- (e): a compound having a benzothiazol structure,
- (f): a compound having a benzoin structure, and
- (g): a compound having a benzoate structure.
The compounds having a solubility of 5% by weight or more in ethyl alcohol at 20°C are preferred.

Compound (a) is selected from diethyl sebacate, bis(2,2,6,6-tetramethyl-4-piperidyl) sebacate, bis(1,2,2,6,6-pentamethyl-4-piperidyl) sebacate.

Compound (b) is selected from benzophenone, 2,2'-dihydroxy-4-methoxybenzophenone, 2,4-dihydroxy-benzophenone.

Compound (c) is selected from 2,2-bis(4'-hydroxyphenyl)propane, ethyl gallate, n-propyl, gallate, isoamyl gallate, salicylic aldoxime, diethyl 4-hydroxy-1,2-phthalate, para-tert-butylphenol.

Compound (d) is benzimidazole.

Compound (e) is selected from 2-chloro-benzothiazole, 2-methyl-5-chlorobenzothiazole, 2-mercaptobenzothiazole.

Compound (f) is benzoin methyl ether.

Compound (g) is selected from propyl p-hydroxybenzoate, phenyl benzoate.

The compounds described above may be used alone or as a combination of the two or more.

The ink according to the present invention contains water as a solvent component. When the following materials are incorporated for the purpose of preventing the drying of the ink, improving the solubility of dyes, the resistance to drying-up of the ink is improved: ethylene glycol, diethylene glycol, triethylene glycol, propylene glycol, dipropylene glycol, glycerol, polyglycerol, polyethylene glycol, polypropylene glycol, methyl cellosolve, ethyl cellosolve, butyl cellosolve, methyl carbitol, ethyl carbitol, butyl carbitol, propylene glycol methyl ether, dipropylene glycol methyl ether, tripropylene glycol methyl ether, 3-methyl-3-methoxybutanol, 2-pyrrolidone, triethanolamine, urea and derivatives thereof.

The urea derivatives include thiourea, ethylene urea, hydroxyethylurea, hydroxypropylurea, ethylene thiourea, diethyl thiourea and the like.

These derivatives may be used alone or as a combination of the two or more.

The ink according to the present invention can appropriately contain, in addition to the above-described components, additives, for example
preservatives such as methyl p-hydroxybenzoate or 1, 2-benzisothiazolin-3-one;
rust preventives such as benzotriazole or diethylamine butoxyethyl acid phosphate;
viscosity modifiers such as water-soluble resins including polyvinyl pyrrolidone, polyvinyl alcohol, cellulose derivatives or maleic acid derivatives;
surface tension modifiers such as surfactants or the like; or
retention modifiers such as polymer emulsions for improving the retention of ink in a non-permeable support such as polyester films or the like, provided that they do not impair the properties of the ink.

Next, referring to the process for preparing a water-soluble ink according to the present invention briefly, it is sufficient that an anionic dye is completely dissolved in water and a sparingly water-soluble compound is then added to form a solution.

The solution is preferably formed with stirring at room temperature or higher, particularly at 80°C or above.

After the sparingly water-soluble compound is completely solubilized, other components are added and the mixture is stirred to form a solution of ink.

### Examples

The present invention is further explained with reference to Examples and Comparative Examples.

### Example 1

| | |
|---|---|
| C.I. Acid Blue 90 (surface tension: 52.3 dyn/cm) | 5.0% by weight |
| | |
| 2,2′-Dihydroxy-4-methoxybenzophenone (solubility in ethyl alcohol: 5% by weight or more) | 2.0 |
| Demineralized water | 71.0 |
| Ethylene glycol | 10.0 |
| Diethylene glycol | 10.0 |
| Triethanolamine | 1.0 |
| PROXEL XL-2 | 1.0 |
| | 100.0 |

Procedure: After Acid Blue 90 was completely dissolved in demineralized water at 60°C by stirring, 2,2'-dihydroxy-4-methoxybenzophenone was added to the solution and the mixture was stirred with heating at 80°C for 1 hour. The remaining components are added, and the mixture was stirred at room temperature for 1 hour and filtered to give a blue ink.

### Example 2

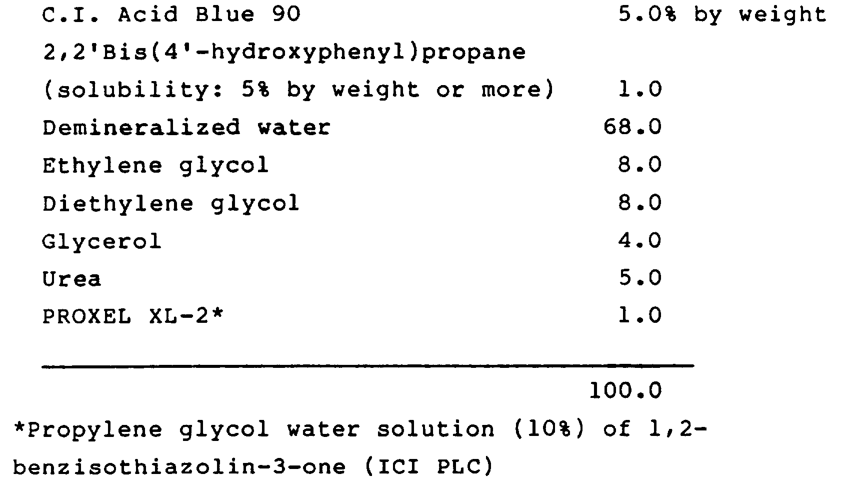

Following the procedure described in Example 1, a blue ink was prepared.

### Example 3

| | |
|---|---|
| C.I. Acid Blue 90 | 5.0% by weight |
| Benzimidazole (solubility: 5% by weight or more) | 2.0 |
| Demineralized water | 71.0 |
| Polyethylene glycol #200 | 20.0 |
| PROXEL XL-2 | 1.0 |
| Triethanolamine | 1.0 |
| | 100.0 |

Following the procedure described in Example 1, a blue ink was prepared.

### Example 4

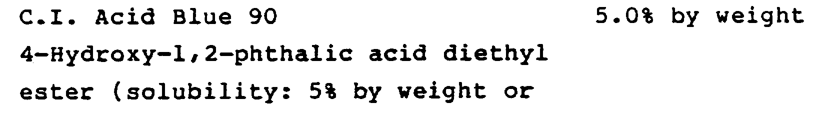

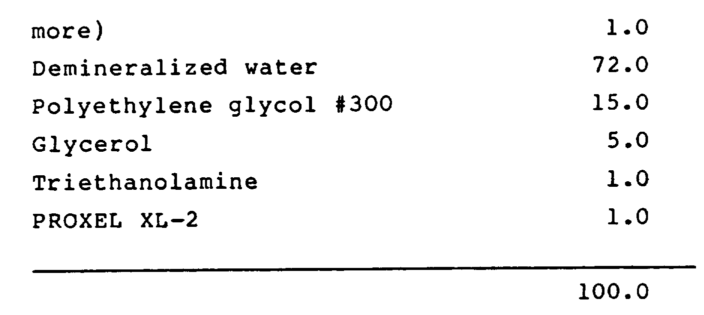

Following the procedure described in Example 1, a blue ink was prepared.

### Example 5

| | |
|---|---|
| C.I. Acid Blue 90 | 5.0% by weight |
| Benzoin methyl ether (solubility: 5% by weight or more) | 1.0 |
| Demineralized water | 72.0 |
| Ethylene glycol | 10.0 |
| Diethylene glycol | 10.0 |
| Triethanolamine | 1.0 |
| PROXEL XL-2 | 1.0 |
| | 100.0 |

Following the procedure described in Example 1, a blue ink was prepared.

### Example 6

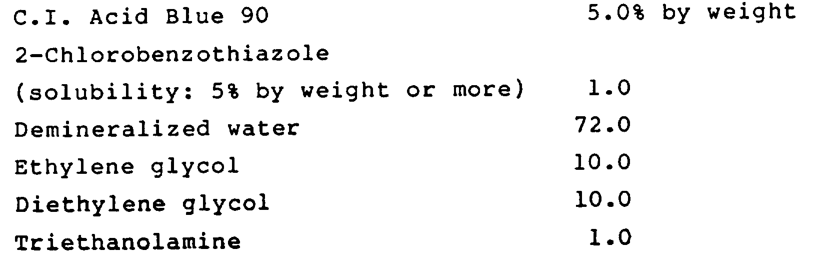

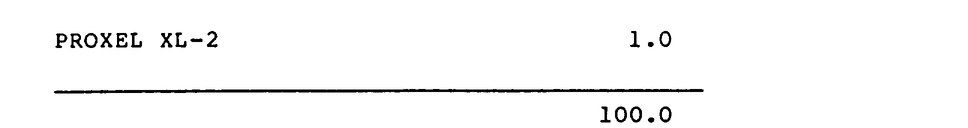

Following the procedure described in Example 1, a blue ink was prepared.

In Examples 1-6, the addition of various kinds of glycols were intended to increase the solubility of dyes and the wettability of inks and to improve the resistance to drying-up. However, this addition did not result in the solubilization of the water-resistance imparting agent.

### Example 7

| | |
|---|---|
| C.I. Acid Blue 90 | 5.0% by weight |
| 2,2'-Dihydroxy-4-methoxybenzophenone | 2.0 |
| Demineralized water | 93.0 |
| | 100.0 |

Procedure: After Acid Blue 90 was completely dissolved in demineralized water by stirring at 60°C, 2,2'-dihydroxy-4-methoxybenzophenone was added and the mixture was stirred with heating at 80°C for 1 hour. After the mixture was left standing, it was filtered to give a blue ink.

While the preparation of the blue inks has been described in Examples 1-7, inks of different colors can be prepared by altering the dyes in the process according to the present invention.

### Example 8

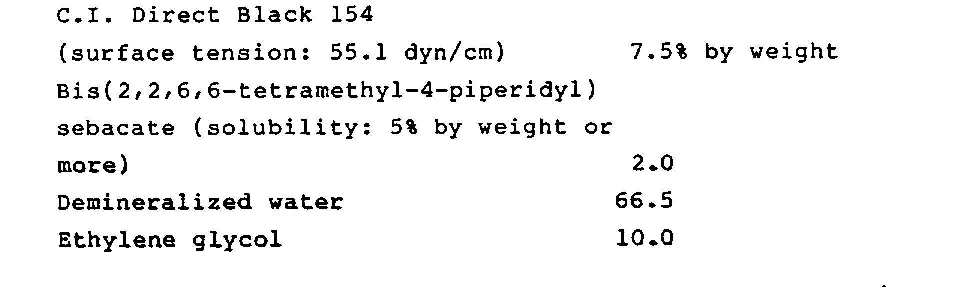

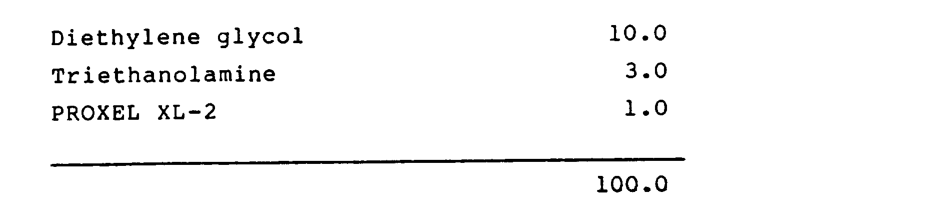

Procedure: After Direct Black 154 was completely dissolved in demineralized water at 60°C by stirring, bis(2,2,6,6-tetramethyl-4-piperidyl) sebacate was added and the mixture was stirred with heating at 80°C for 2 hours. Next, the remaining components were added, and the mixture was stirred at room temperature for 1 hour, cooled by leaving it standing and filtered to give a black ink.

### Example 9

| | |
|---|---|
| C.I. Acid Yellow 40 (surface tension: 37.4 dyn/cm) | 5.0% by weight |
| Benzoin methyl ether | 1.0 |
| Ethylene glycol | 10.0 |
| Diethylene glycol | 10.0 |
| Triethanolamine | 1.0 |
| PROXEL XL-2 | 1.0 |
| Demineralized water | 72.0 |
| | 100.0 |

Procedure: After Acid Yellow 40 was completely dissolved in demineralized water at 60°C by stirring, benzoin methyl ether was added and the mixture was stirred with heating at 80°C for 1 hour. Next, the remaining components were added, and the mixture was stirred at room temperature for 1 hour, cooled by leaving it standing and filtered to give a yellow ink.

In the ink according to the present invention, two or more kinds of dyes can be used as a mixture.

### Example 10

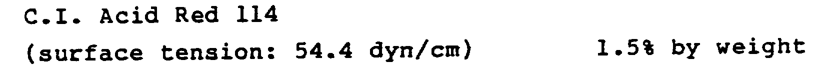

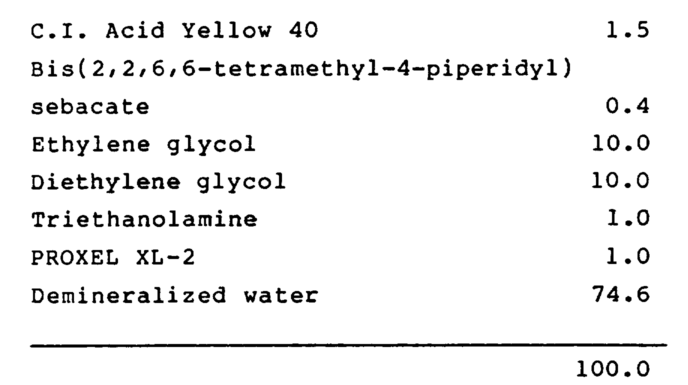

Procedure: After Acid Red 114 and Acid Yellow 40 were completely dissolved in demineralized water at 60°C by stirring, bis(2,2,6,6-tetramethyl-4-piperidyl) sebacate was added and the mixture was stirred with heating at 80°C for 1 hour. Next, the remaining components were added, and the mixture was stirred at room temperature for 1 hour, cooled by leaving it standing and filtered to give an orange ink.

In the ink according to the present invention, two or more kinds of dyes can be used as a mixture.

### Example 11

| | |
|---|---|
| C.I. Acid Blue 90 | 5.0% by weight |
| p-tert-Butylphenol (solubility: 5% by weight or more) | 0.5 |
| Propyl p-hydroxy-benzoate (solubility: 5% by weight or more) | 0.5 |
| Polyethylene glycol #200 | 20.0 |
| PROXEL XL-2 | 1.0 |
| Triethanolamine | 1.0 |
| Demineralized water | 72.0 |
| | 100.0 |

Procedure: After Acid Blue 90 was completely dissolved in demineralized water at 60°C by stirring, p-tert-butylphenol and propyl p-hydroxybenzoate were added and the mixture was stirred with heating at 80°C for 1 hour. Next, the remaining components were added, and the mixture was stirred at room temperature for 1 hour, cooled by leaving it standing and filtered to give a blue ink.

### Comparative Example 1 (without a water-resistance imparting agent)

| | |
|---|---|
| C.I. Acid Blue 90 | 5.0% by weight |
| Demineralized water | 73.0 |
| Polyethylene glycol #200 | 20.0 |
| Triethanolamine | 1.0 |
| PROXEL XL-2 | 1.0 |
| | 100.0 |

Procedure: The first two components (Acid Blue 90 and demineralized water) were stirred with heating at 80°C for 1 hour. Next, the remaining components were added, and the mixture was stirred at room temperature for 1 hour and filtered to give a blue ink.

### Comparative Example 2 (without a water-resistance imparting agent)

| | |
|---|---|
| C.I. Acid Yellow 40 | 5.0% by weight |
| Ethylene glycol | 10.0 |
| Diethylene glycol | 10.0 |
| Triethanolamine | 1.0 |
| PROXEL XL-2 | 1.0 |
| Demineralized water | 73.0 |
| | 100.0 |

Procedure: The first two components were stirred with heating at 80°C for 1 hour. After cooling the mixture by leaving it standing, it is filtered to give a blue ink.

### Comparative Example 3 (without a water-resistance imparting agent)

| | |
|---|---|
| C.I. Direct Black 154 | 7.5% by weight |
| Demineralized water | 68.5 |
| Ethylene glycol | 10.0 |
| Diethylene glycol | 10.0 |
| Triethanolamine | 3.0 |
| PROXEL XL-2 | 1.0 |
| | 100.0 |

Procedure: The first two components (Direct Black 154 and demineralized water) were stirred with heating at 80°C for 2 hours. Next, the remaining components were added, and the mixture was stirred at room temperature for 1 hour and filtered to give a black ink.

### Comparative Example 4 (with a dye having a surface tension of exceeding 60 dyn/cm)

| | |
|---|---|
| C.I. Direct Blue 87 (surface tension: 68.4 dyn/cm) | 5.0% by weight |
| 2,2'-Dihydroxy-4-methoxybenzophenone | 2.0 |
| Demineralized water | 71.0 |
| Ethylene glycol | 10.0 |
| Diethylene glycol | 10.0 |
| Thiethanolamine | 1.0 |
| PROXEL XL-2 | 1.0 |
| | 100.0 |

Following the procedure described in Example 1, a blue ink was obtained.

### Comparative Example 5 (with a water-resistance imparting agent having a solubility in ethanol of less than 5% by weight)

| | |
|---|---|
| C.I. Acid Blue 90 | 5.0% by weight |
| 8-Benzyl-7,7,9,9-tetramethyl-3-octyl-1,3,8-triazaspiro[4,5]-undecane-2,4-dione (solubility: less than 5% by weight) | 2.0 |
| Demineralized water | 71.0 |
| Ethylene glycol | 10.0 |
| Diethylene glycol | 10.0 |
| Triethanolamine | 1.0 |
| PROXEL XL-2 | 1.0 |
| | 100.0 |

Following the procedure described in Example 1, aFollowing the procedure described in Example 1, a blue ink was obtained.

The composition of Examples and Comparative Examples are shown in Tables 1 and 2.

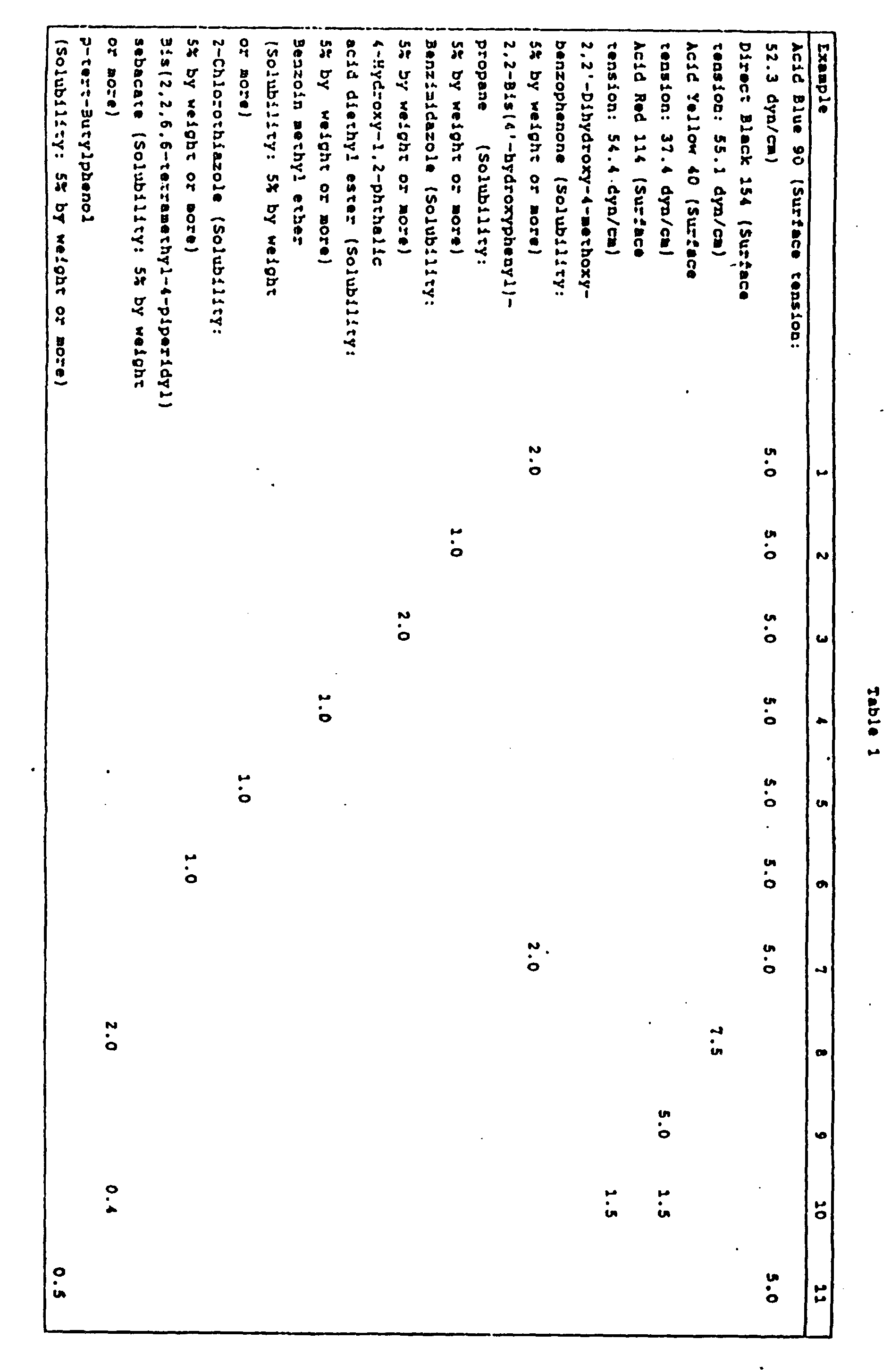

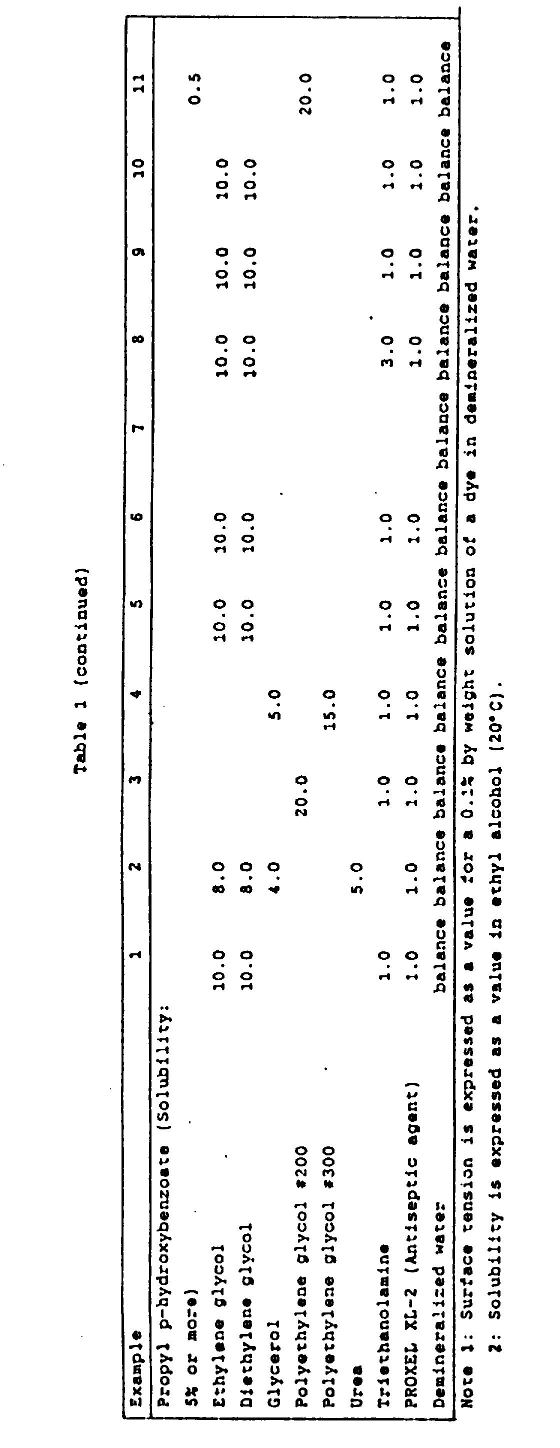

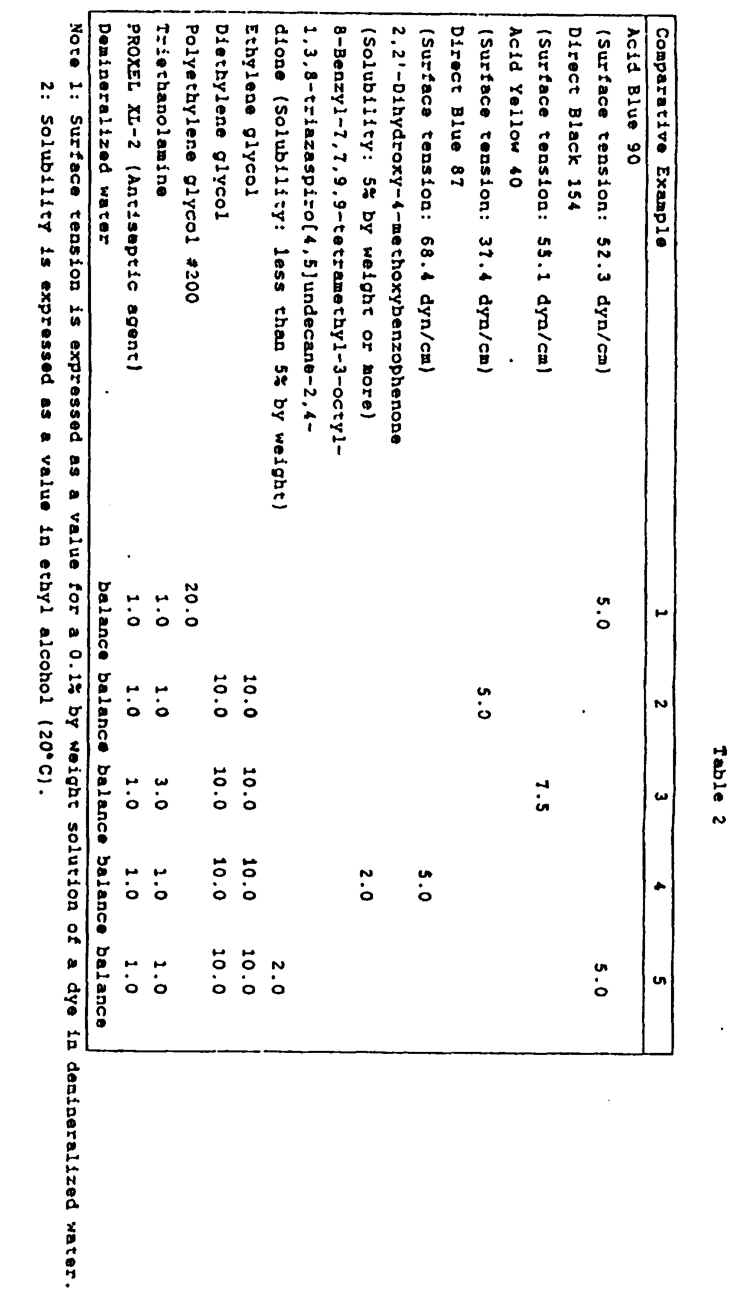

### Comparison Test

The ink compositions prepared in Examples and Comparative Examples were tested with reference to their aging resistance and water-resistance on paper. The results are shown in Table 3.

### Testing Method

### Water-resistance on paper

The blotting of ink and the staining of writing paper were observed upon dipping of a paper which had been just written in ink for a period of 1 minute.
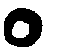 No blotting of ink or no staining of paper,
○ A little blotting of ink and no staining of paper,
Δ Much blotting of ink and staining of paper, and
X Little trace of written matter.

### Aging resistance

Physical properties were measured upon leaving standing of the inks at 50°C for 60 days and compared with those before aging.

The deposition of dyes or water-resistance imparting agent was observed with an optical microscope (magnification: x 100).

### Evaluation of observations

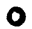 Little variation of physical properties before and after aging,
○ A little variation of physical properties before and after aging, and no deposition,
X Large variation of physical properties before and after aging accompanied with deposition.
Viscosity: measured at 20°C with a B type viscometer (TOKYO KEIKI).
pH: measured with a pH meter (TOA DENPA KOGYO).
Surface tension: measured with KYOWA KAIMEN KAGAKU surface tensiometer Model CBUPA-3 at 20°C hour.

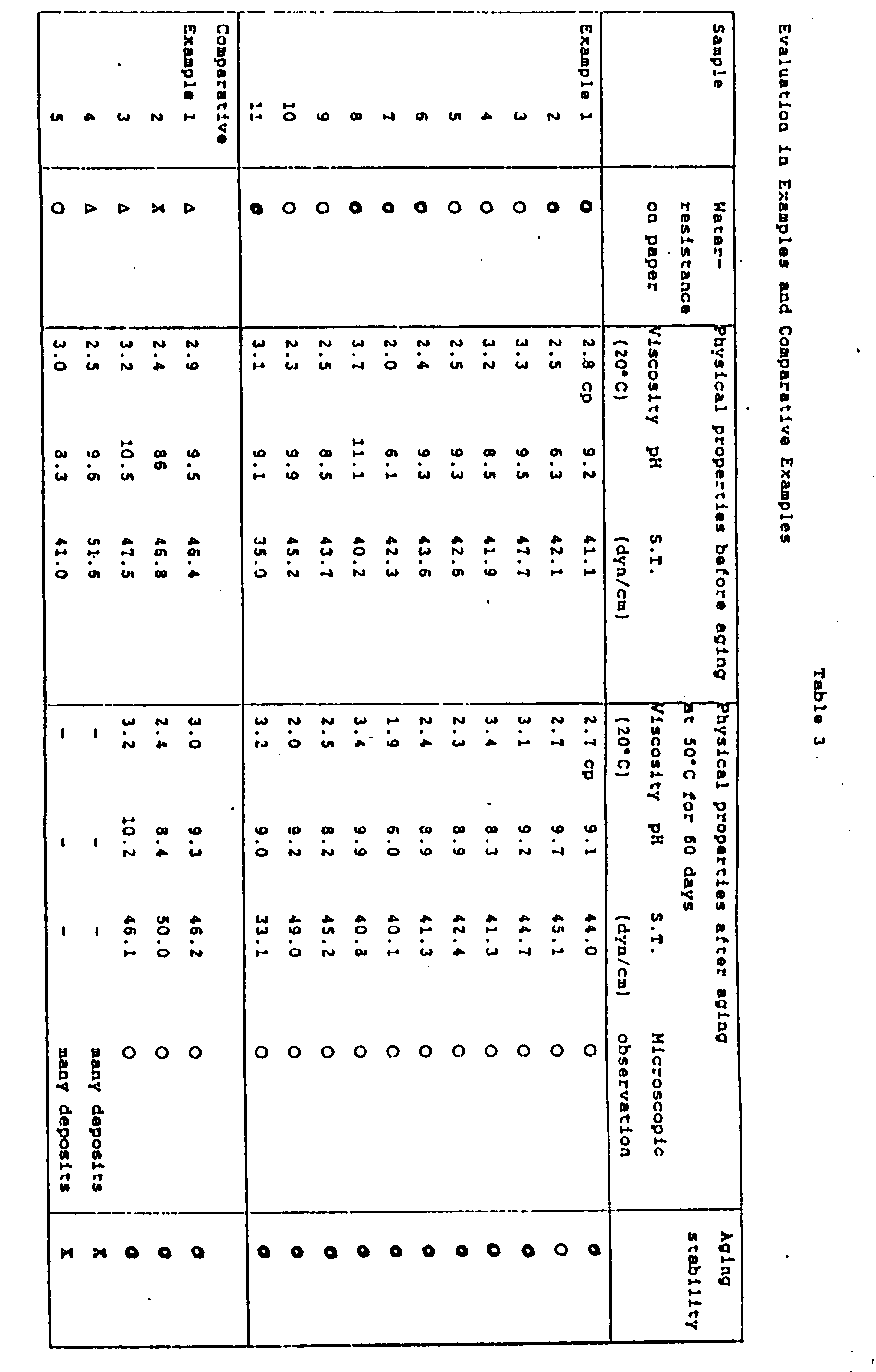

The ink of the present invention is, as apparent from the aforementioned comparison tests, excellent in water-resistance on paper and aging resistance and suitable for inks for writing tools, plotter pens or ink jet printers.

Further variations and modifications of the foregoing will be apparent to those skilled in the art and are intended to be encompassed by the appended claims.

## Claims

1. A water-resistant ink composition comprising:
(A) water,
(B) an anionic dye selected from C.I. Acid Yellow 40, C.I. Acid Orange 51, C.I. Acid Red 114 and 249, C.I. Acid Blue 83, 90, 103, and 127, C.I. Acid Green 25 and 27, C.I. Direct Black 154, and epoxydized C.I. Direct Black 154, and
(C) a water-resistance modifier which contains as an effective component a sparingly water-soluble compound containing at least one oleophilic group selected from an aromatic ring or an aliphatic hydrocarbon having 6-12 carbon atoms, and at least one hydrophilic group having at least one of O, N and S atoms;
wherein said sparingly water-soluble compound is a compound which is one or two of the compounds selected from
(a) a compound having a dicarboxylate structure selected from bis(2,2,6,6-tetramethyl-4-piperidyl) sebacate or bis(1,2,2,6,6-pentamethyl-4-piperidyl)-sebacate;
(b) a compound having a benzophenone structure selected from benzophenone, 2,2'-dihydroxy-4-methoxy-benzophenone, or 2,4-dihydroxy-benzophenone;
(c) a compound having a phenol structure selected from 2,2-bis(4'-hydroxyphenyl)propane, ethyl gallate, n-propyl gallate, isoamyl gallate, salicylic aldoxime, diethyl 4-hydroxy-1,2-phthalate, or para-tert-butylphenol;
(d) benzimidazole;
(e) a compound having a benzothiazole structure selected from 2-chloro-benzothiazole, 2-methyl-5-chlorobenzothiazole, or 2-mercaptobenzothiazole;
(f) benzoin methyl ether; and
(g) a compound having a benzoate structure selected from propyl p-hydroxybenzoate or phenyl benzoate.

2. A water-resistant ink composition as claimed in claim 1 wherein said water-resistance modifier comprises an amount of sparingly water-soluble compound, effective to improve the water-resistance of said dye on paper, which contains at least one oleophilic group selected from an aromatic ring or an aliphatic hydrocarbon having 6-12 carbon atoms and at least one hydrophilic group having at least one or O, N and S atoms and which has a solubility of 5% by weight or more in ethanol at 20°C.

3. A water-resistant ink composition as claimed in claim 1 or claim 2 further comprising one or more dry-up resistance imparting agents selected from an alcohol, an amine, a urea compound, 2-pyrrolidone, polyvinyl pyrrolidone, sorbitol and dimethylsulfone.

4. A water-resistant ink composition as claimed in claim 3, wherein said urea compound is selected from urea, thiourea, ethylene urea, hydroxyethylurea, ethylene thiourea, diethylthiourea and mixtures thereof.

5. A process for preparing a water-resistant ink composition comprising blending together
(A) water,
(B) an anionic dye selected from C.I. Acid Yellow 40, C.I. Acid Orange 51, C.I. Acid Red 114 and 249, C.I. Acid Blue 83, 90, 103, and 127, C.I. Acid Green 25 and 27, C.I. Direct Black 154, and epoxydized C.I. Direct Black 154, and
(C) a water-resistance modifier which contains as an effective component a sparingly water-soluble compound containing at least one oleophilic group selected from an aromatic ring or an aliphatic hydrocarbon having 6-12 carbon atoms, and at least one hydrophilic group having at least one of O, N and S atoms;
wherein said sparingly water-soluble compound is a compound which is one or two of the compounds selected from
(a) a compound having a dicarboxylate structure selected from bis(2,2,6,6-tetramethyl-4-piperidyl) sebacate or bis(l,2,2,6,6-pentamethyl-4-piperidyl)-sebacate;
(b) a compound having a benzophenone structure selected from benzophenone, 2,2'-dihydroxy-4-methoxy-benzophenone, or 2,4-dihydroxy-benzophenone;
(c) a compound having a phenol structure selected from 2,2-bis(4'-hydroxyphenyl)propane, ethyl gallate, n-propyl gallate, isoamyl gallate, salicylic aldoxime, diethyl 4-hydroxy-1,2-phthalate, or para-tert-butylphenol;
(d) benzimidazole;
(e) a compound having a benzothiazole structure selected from 2-chloro-benzothiazole, 2-methyl-5-chlorobenzothiazole, or 2-mercaptobenzothiazole;
(f) benzoin methyl ether; and
(g) a compound having a benzoate structure selected from propyl p-hydroxybenzoate or phenyl benzoate.

6. A process as claimed in claim 5, wherein the step of forming a solution is conducted at a temperature not lower than room temperature.

## Patentansprüche

1. Wasserbeständige Tintenzusammensetzung, umfassend
(A) Wasser,
(B) einen anionischen Farbstoff, ausgewählt aus C.I. Acid Yellow 40, C.I. Acid Orange 51, C.I. Acid Red 114 und 249, C.I. Acid Blue 83, 90, 103 und 127, C.I. Acid Green 25 und 27, C.I. Direct Black 154 und epoxidiertem C.I. Direct Black 154, und
(C) einen wasserbeständigen Modifikator, der als wirksamen Bestandteil eine kaum wasserlösliche Verbindung enthält, die mindestens eine oleophile Gruppe, ausgewählt aus einem aromatischen Ring oder einem aliphatischen Kohlenwasserstoffrest mit 6 - 12 Kohlenstoffatomen, und mindestens eine hydrophile Gruppe mit mindestens einem O-, N- und S-Atom enthält,
wobei die kaum wasserlösliche Verbindung eine Verbindung ist, die eine oder zwei der Verbindungen ist, ausgewählt aus
(a) einer Verbindung mit einer Dicarboxylatstruktur, ausgewählt aus Bis(2,2,6,6-tetramethyl-4-piperidyl)sebacat oder Bis(1,2,2,6,6-pentamethyl-4-piperidyl)sebacat,
(b) einer Verbindung mit einer Benzophenonstruktur, ausgewählt aus Benzophenon, 2,2'-Dihydroxy-4-methoxybenzophenon oder 2,4-Dihydroxybenzophenon,
(c) einer Verbindung mit einer Phenolstruktur, ausgewählt aus 2,2-Bis(4'hydroxyphenyl)propan, Gallussäureethylester, Gallussäure-n-propylester, Gallussäureisoamylester, Salicylsäurealdoxim, 4-Hydroxy-1,2-phthalsäurediethylester oder para-tert-Butylphenol,
(d) Benzimidazol,
(e) einer Verbindung mit einer Benzthiazolstruktur, ausgewählt aus 2-Chlorbenzthiazol, 2-Methyl-5-chlorbenzthiazol oder 2-Mercaptobenzthiazol,
(f) Benzoinmethylether und
(g) einer Verbindung mit einer Benzoesäureesterstruktur, ausgewählt aus p-Hydroxybenzoesäurepropylester oder Benzoesäurephenylester.

2. Wasserbeständige Tintenzusammensetzung nach Anspruch 1, in der der wasserbeständige Modifikator eine Menge der kaum wasserlöslichen Verbindung umfaßt, die wirksam ist, um die Wasserbeständigkeit des Farbstoffs auf dem Papier zu verbessern, die mindestens eine oleophile Gruppe, ausgewählt aus einem aromatischen Ring oder einem aliphatischen Kohlenwasserstoffrest mit 6 - 12 Kohlenstoffatomen, und mindestens eine hydrophile Gruppe mit mindestens einem O-, N- und S-Atom enthält und bei 20°C in Ethanol eine Löslichkeit von 5 Gew, - % oder mehr aufweist.

3. Wasserbeständige Tintenzusammensetzung nach Anspruch 1 oder Anspruch 2, die ferner ein oder mehrere Mittel für Austrocknungsbeständigkeit, ausgewählt aus einem Alkohol, Amin, einer Harnstoffverbindung, 2-Pyrrolidon, Polyvinylpyrrolidon,Sorbit und Dimethylsulfon, umfaßt.

4. Wasserbeständige Tintenzusammensetzung nach Anspruch 3, in der die Harnstoffverbindung ausgewählt ist aus Harnstoff, Thioharnstoff, Ethylenharnstoff, Hydroxyethylharnstoff, Ethylenthioharnstoff, Diethylthioharnstoff und Gemischen davon.

5. Verfahren zur Herstellung einer wasserbeständigen Tintenzusammensetzung, umfassend das Zusammenmischen von
(A) Wasser,
(B) einem anionischen Farbstoff, ausgewählt aus C.I. Acid Yellow 40, C.I. Acid Orange 51, C.I. Acid Red 114 und 249, C.I. Acid Blue 83, 90, 103 und 127, C.I. Acid Green 25 und 27, C.I. Direct Black 154 und epoxidiertem C.I. Direct Black 154, und
(C) einem wasserbeständigen Modifikator, der als wirksamen Bestandteil eine kaum wasserlösliche Verbindung enthält, die mindestens eine oleophile Gruppe, ausgewählt aus einem aromatischen Ring oder einem aliphatischen Kohlenwasserstoffrest mit 6 - 12 Kohlenstoffatomen, und mindestens eine hydrophile Gruppe mit mindestens einem O-, N- und S-Atom enthält,
wobei die kaum wasserlösliche Verbindung eine Verbindung ist, die eine oder zwei der Verbindungen ist, ausgewählt aus
(a) einer Verbindung mit einer Dicarboxylatstruktur, ausgewählt aus Bis(2,2,6,6-tetramethyl-4-piperidyl)sebacat oder Bis(1,2,2,6,6-pentamethyl-4-piperidyl)sebacat,
(b) einer Verbindung mit einer Benzophenonstruktur, ausgewählt aus Benzophenon, 2,2'-Dihydroxy-4-methoxybenzophenon oder 2,4-Dihydroxybenzophenon,
(c) einer Verbindung mit einer Phenolstruktur, ausgewählt aus 2,2-Bis(4'-hydroxyphenyl)propan, Gallussäureethylester, Gallussäure-n-propylester, Gallussäureisoamylester, Salicylsäurealdoxim, 4-Hydroxy-1,2-phthalsäurediethylester oder para-tert-Butylphenol,
(d) Benzimidazol,
(e) einer Verbindung mit einer Benzthiazolstruktur, ausgewählt aus 2-Chlorbenzthiazol 2-Methyl-5-chlorbenzthiazol oder 2-Mercaptobenzthiazol,
(f) Benzoinmethylether und
(g) einer Verbindung mit einer Benzoesäureesterstruktur, ausgewählt aus p-Hydroxybenzoesäurepropylester oder Benzoesäurephenylester.

6. Verfahren nach Anspruch 5, wobei der Schritt der Erzeugung einer Lösung bei einer nicht niedrigeren Temperatur als Raumtemperatur durchgeführt wird.

## Revendications

1. Composition d'encre résistante à l'eau, comprenant :
(A) de l'eau,
(B) un colorant anionique choisi parmi les C.I. Jaune Acide 40, C.I. Orangé Acide 51, C.I. Rouge Acide 114 et 249, C.I. Bleu Acide 83, 90, 103, et 127, C.I. Vert Acide 25 et 27, C.I. Noir Direct 154 et C.I. Noir Direct 154 époxydé, et
(C) un agent de modification de la résistance à l'eau, qui contient comme composant efficace un composé faiblement soluble dans l'eau contenant au moins un groupe oléophile choisi parmi un cycle aromatique ou un hydrocarbure aliphatique comportant 6 à 12 atomes de carbone, et au moins un groupe hydrophile ayant au moins un des atomes d'oxygène, d'azote et de soufre ;
dans laquelle ledit composé faiblement soluble dans l'eau est un composé qui est un ou deux des composés choisis parmi
(a) un composé ayant une structure de dicarboxylate, choisi parmi les sébacate de bis(2,2,6,6-tétraméthyl-4-pipéridyle) et sébacate de bis(1,2,2,6,6-pentaméthyl-4-pipéridyle) ;
(b) un composé ayant une structure de benzophénone, choisi parmi les benzophénone, 2,2'-dihydroxy-4-méthoxy-benzophénone, et 2,4-dihydroxy-benzophénone ;
(c) un composé ayant une structure de phénol, choisi parmi les 2,2-bis(4'-hydroxyphényl)propane, gallate d'éthyle, gallate de n-propyle, gallate d'iso-amyle, salicylaldoxime, 4-hydroxy- 1,2-phtalate de diéthyle, et para-tertiobutylphénol ;
(d) le benzimidazole ;
(e) un composé ayant une structure de benzothiazole, choisi parmi les 2-chloro-benzothiazole, 2-méthyl-5-chlorobenzothiazole, et 2-2-mercaptobenzothiazole ;
(f) le benzoïne-méthyl-éther ;
(g) un composé ayant une structure de benzoate, choisi parmi les p-hydroxybenzoate de propyle, et benzoate de phényle.

2. Composition d'encre résistante à l'eau conforme à la revendication 1, dans laquelle ledit agent de modification de la résistance à l'eau comprend une quantité efficace de composé faiblement soluble dans l'eau, pour améliorer la résistance à l'eau dudit colorant sur papier, qui contient au moins un groupe oléophile choisi parmi un cycle aromatique et un hydrocarbure aliphatique comportant 6 à 12 atomes de carbone et au moins un groupe hydrophile ayant au moins un des atomes d'oxygène, d'azote et de soufre, et qui a une solubilité de 5% en poids ou plus dans l'éthanol à 20° C.

3. Composition d'encre résistante à l'eau conforme à la revendication 1 ou 2, comprenant en outre un ou plusieurs des agents conférant une résistance au déssèchement, choisis parmi les alcool, amine, composé d'urée, 2-pyrrolidone, polyvynilpyrrolidone, sorbitol, et diméthylsulfone.

4. Composition d'encre résistante à l'eau conforme à la revendication 3, dans laquelle ledit composé d'urée est choisi parmi les urée, thio-urée, éthylène-urée, hydroxyéthylurée, éthylènethio-urée, diéthylthio-urée, et des mélanges de ces derniers.

5. Procédé de préparation d'une composition d'encre résistante à l'eau comprenant le fait de mélanger ensemble
(A) l'eau,
(B) un colorant anionique choisi parmi les C.I. Jaune Acide 40, C.I. Orangé Acide 51, C.I. Rouge Acide 114 et 249, C.I. Bleu Acide 83, 90, 103, et 127, C.I. Vert Acide 25 et 27, C.I. Noir Direct 154 et C.I. Noir Direct 154 époxydé, et
(C) un agent de modification de la résistance à l'eau qui contient comme composant efficace un composé faiblement soluble dans l'eau contenant au moins un groupe oléophile choisi parmi un cycle aromatique ou un hydrocarbure aliphatique comportant 6 à 12 atomes de carbone, et au moins un groupe hydrophile ayant au moins un des atomes d'oxygène, d'azote, et de soufre ;
dans lequel ledit composé faiblement soluble dans l'eau est un composé qui est un ou deux des composés choisis parmi
(a) un composé ayant une structure de dicarboxylate, choisi parmi les sébacate de bis(2,2,6,6-tétraméthyl-4-pipéridyle) et sébacate de bis(1,2,2,6,6-pentaméthyl-4-pipéridyle) ;
(b) un composé ayant une structure de benzophénone, choisi parmi les benzophénone, 2,2'-dihydroxy-4-méthoxy-benzophénone, et 2,4-dihydroxy-benzophénone ;
(c) un composé ayant une structure de phénol, choisi parmi les 2,2-bis(4'-hydroxyphényl)propane, gallate d'éthyle, gallate de n-propyle, gallate d'iso-amyle, salicylaldoxime, 4-hydroxy-1,2-phtalate de diéthyle, et para-tertiobutylphénol ;
(d) le benzimidazole ;
(e) un composé ayant une structure de benzothiazole, choisi parmi les 2-chloro-benzothiazole, 2-méthyl-5-chlorobenzothiazole, et 2-2-mercaptobenzothiazole ;
(f) le benzoïne-méthyl-éther ;
(g) un composé ayant une structure de benzoate, choisi parmi les p-hydroxybenzoate de propyle, et benzoate de phényle.

6. Procédé conforme à la revendication 5, dans laquelle l'étape de formation d'une solution est réalisée à une température qui n'est pas plus basse que la température ambiante.
